(19) Europäisches Patentamt
European Patent Office
Office européen des brevets

(11) **EP 2 898 202 B1**

(12) **EUROPEAN PATENT SPECIFICATION**

(45) Date of publication and mention
of the grant of the patent:
**01.11.2017 Bulletin 2017/44**

(21) Application number: **13863474.6**

(22) Date of filing: **19.09.2013**

(51) Int Cl.:
*F02C 7/06* (2006.01)    *F01D 25/18* (2006.01)

(86) International application number:
**PCT/US2013/060667**

(87) International publication number:
**WO 2014/092831 (19.06.2014 Gazette 2014/25)**

(54) **LUBRICATION SYSTEM HAVING POROUS FEATURE**

SCHMIERSYSTEM MIT PORÖSEN MERKMALEN

SYSTÈME DE LUBRIFICATION AYANT UN ÉLÉMENT POREUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.09.2012 US 201213622632**

(43) Date of publication of application:
**29.07.2015 Bulletin 2015/31**

(73) Proprietor: **United Technologies Corporation
Farmington, CT 06032 (US)**

(72) Inventor: **XU, JinQuan
Groton, Connecticut 06340 (US)**

(74) Representative: **Gittins, Alex Michael
Dehns
St Bride's House
10 Salisbury Square
London EC4Y 8JD (GB)**

(56) References cited:
**EP-A2- 1 925 855        EP-A2- 1 994 974
US-A- 4 672 932         US-A- 4 714 139
US-A- 6 024 417         US-A- 6 139 595
US-A1- 2005 039 433     US-A1- 2011 297 485**

## Description

## BACKGROUND

The present disclosure relates to a lubrication system for a gas turbine engine and, more particularly, to a lubrication system that remains operable in reduced gravity (reduced-G) conditions.

Aircraft gas turbine engines include a lubrication system to supply lubrication to various components. An auxiliary lubrication capability may also be provided so that at least some components can be lubricated under transient conditions. It is also desirable to ensure that at least some components are not starved of lubricant during reduced-G conditions in which acceleration due to gravity, is partially or entirely counteracted by aircraft maneuvers and/or orientation.

## SUMMARY

A lubricant tank according to one disclosed non-limiting embodiment of the present disclosure includes a lubricant tank body, a lubricant tank discharge passageway at least partially within the lubricant tank body and a porous media within said lubricant tank body.

In a further embodiment of the foregoing embodiment, the lubricant tank body and the lubricant tank discharge passageway are defined along a non-linear axis, the lubricant tank body defines an lubricant auxiliary tank for a Fan Drive Gear System.

The lubricant tank discharge passageway includes an opening to allow lubricant transfer between the lubricant

tank discharge passageway and the lubricant tank body. The opening is through a wall of said lubricant tank discharge passageway. The porous media defines said opening.

In a further embodiment of any of the foregoing embodiments, a contact angle of a lubricant on said porous media is less than 90 degrees.

In a further embodiment of any of the foregoing embodiments, at least a portion of said lubricant tank discharge passageway includes said porous media to allow lubricant transfer between said lubricant tank discharge passageway and said lubricant tank body.

In a further embodiment of any of the foregoing embodiments, said porous media at least partially surrounds said lubricant tank discharge passageway.

In a further embodiment of any of the foregoing embodiments, at least a portion of said lubricant tank body is filled with said porous media.

In a further embodiment of any of the foregoing embodiments, said lubricant tank body is filled with said porous media.

In a further embodiment of any of the foregoing embodiments, said porous media is wrapped around at least a portion of said lubricant tank discharge passageway.

In a further embodiment of any of the foregoing embodiments, said porous media is wrapped around said lubricant tank discharge passageway.

In a further embodiment of any of the foregoing embodiments, at least a portion of said lubricant tank discharge passageway is filled with said porous media.

A lubrication system according to another disclosed non-limiting embodiment of the present disclosure includes a main tank configured to hold lubricant that is communicated from said main tank to a component along a first communication path, an lubricant auxiliary tank configured to hold lubricant that is communicated from said component to said lubricant auxiliary tank along a second communication path, said first communication path separate from said second communication path, an lubricant auxiliary tank discharge passageway at least partially within said lubricant auxiliary tank, said lubricant auxiliary tank discharge passageway includes an opening to permit lubricant transfer between said lubricant auxiliary tank and said lubricant auxiliary tank discharge passageway and a porous media within said lubricant auxiliary tank body.

Said opening is defined by said porous media.

In a further embodiment of any of the foregoing embodiments, the said porous media defines a multiple of perforations.

The porous media forms a portion of said lubricant auxiliary tank discharge passageway.

A method of reducing lubrication starvation from a lubrication system in communication with a geared architecture for a gas turbine engine, according to another disclosed non-limiting embodiment of the present disclosure includes locating a porous media within an lubricant auxiliary tank.

In a further embodiment of the foregoing embodiment, the method includes forming an opening in an lubricant auxiliary tank discharge passageway through a wall

thereof, the lubricant auxiliary tank discharge passageway located within the lubricant auxiliary tank and locating the porous media within the opening.

In a further embodiment of any of the foregoing embodiments, the method includes locating the porous media around the lubricant auxiliary tank discharge passageway.

The closest prior art document EP 1994974 discloses an oil filter apparatus comprising an oil inlet, an oil outlet, and coarse and fine filter mediums.

## BRIEF DESCRIPTION OF THE DRAWINGS

Various features will become apparent to those skilled in the art from the following detailed description of the disclosed non-limiting embodiment. The drawings that accompany the detailed description can be briefly described as follows:

Figure 1 is a schematic cross-section of a gas turbine engine;

Figure 2 is a cross sectional side elevation view of a gear train configured as a star system and useful in an aircraft gas turbine engine;

Figure 3 is a schematic diagram showing a lubrication system in a normal state of operation, i.e. with the lubricant pressure at a normal level;

Figure 4 is a schematic diagram showing the lubrication system of FIG. 3 shortly after the onset of an abnormal state of operation, i.e. with the lubricant pressure lower than a normal level;

Figure 5 is a schematic diagram showing the lubrication system at a later time than that shown in Figure 4;

Figure 6 is a schematic view showing an lubricant auxiliary tank mounted adjacent to a Fan Drive Gear System of a geared turbofan engine according to one non-limiting embodiment;

Figure 7 is an expanded schematic view showing the lubricant auxiliary tank according to another non-limiting embodiment;

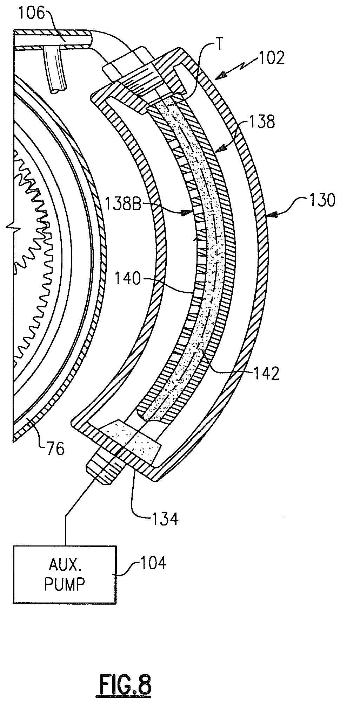

Figure 8 is an expanded schematic view showing the lubricant auxiliary tank according to an arrangement not in accordance with the present invention;

Figure 9 is an expanded schematic view showing the lubricant auxiliary tank according to another arrangement not in accordance with the present invention; and

Figure 10 is an expanded schematic view showing the lubricant auxiliary tank according to another non-limiting embodiment.

## DETAILED DESCRIPTION

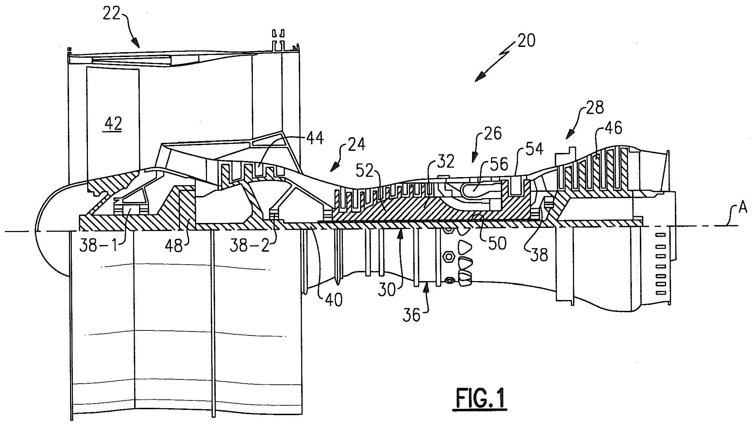

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines such as a three-spool (plus fan) engine wherein an intermediate spool includes an intermediate pressure compressor (IPC) between the LPC and HPC and an intermediate pressure turbine (IPT) between the HPT and LPT.

The engine 20 generally includes a low spool 30 and a high spool 32 mounted for rotation about an engine central longitudinal axis A relative to an engine static structure 36 via several bearing structures 38. The low spool 30 generally includes an inner shaft 40 that interconnects a fan 42, a low pressure compressor 44 ("LPC") and a low pressure turbine 46 ("LPT"). The inner shaft 40 drives the fan 42 through a geared architecture 48 to drive the fan 42 at a lower speed than the low spool 30. An exemplary reduction transmission is an epicyclic transmission, namely a planetary or star gear system.

The high spool 32 includes an outer shaft 50 that interconnects a high pressure compressor 52 ("HPC") and high pressure turbine 54 ("HPT"). A combustor 56 is arranged between the high pressure compressor 52 and the high pressure turbine 54. The inner shaft 40 and the outer shaft 50 are concentric and rotate about the engine central longitudinal axis A which is collinear with their longitudinal axes.

Core airflow is compressed by the low pressure compressor 44 then the high pressure compressor 52, mixed with the fuel and burned in the combustor 56, then expanded over the high pressure turbine 54 and low pressure turbine 46. The turbines 54, 46 rotationally drive the respective low spool 30 and high spool 32 in response to the expansion.

The main engine shafts 40, 50 are supported at a plurality of points by bearing structures 38 within the static structure 36. It should be understood that various bearing systems 38 at various locations may alternatively or additionally be provided.

In one non-limiting example, the gas turbine engine 20 is a high-bypass geared aircraft engine. In a further example, the gas turbine engine 20 bypass ratio is greater than about six (6:1). The geared architecture 48 can include an epicyclic gear train, such as a planetary gear system or other gear system. The example epicyclic gear train has a gear reduction ratio of greater than about 2.3, and in another example is greater than about 2.5:1. The geared turbofan enables operation of the low spool 30 at higher speeds which can increase the operational efficiency of the low pressure compressor 44 and low pressure turbine 46 and render increased pressure in a fewer number of stages.

A pressure ratio associated with the low pressure turbine 46 is pressure measured prior to the inlet of the low pressure turbine 46 as related to the pressure at the outlet of the low pressure turbine 46 prior to an exhaust nozzle of the gas turbine engine 20. In one non-limiting embodiment, the bypass ratio of the gas turbine engine 20 is greater than about ten (10:1), the fan diameter is significantly larger than that of the low pressure compressor 44, and the low pressure turbine 46 has a pressure ratio that is greater than about five (5:1). It should be understood, however, that the above parameters are only exemplary of one embodiment of a geared architecture engine and that the present disclosure is applicable to other gas turbine engines.

In one embodiment, a significant amount of thrust is provided by the bypass flow path B due to the high bypass ratio. The fan section 22 of the gas turbine engine 20 is designed for a particular flight condition - typically cruise at about 0.8 Mach and about 35,000 feet. This flight condition, with the gas turbine engine 20 at its best fuel consumption, is also known as bucket cruise Thrust Specific Fuel Consumption (TSFC). TSFC is an industry standard parameter of fuel consumption per unit of thrust.

Fan Pressure Ratio is the pressure ratio across a blade of the fan section 22 without the use of a Fan Exit Guide Vane system. The low Fan Pressure Ratio according to one non-limiting embodiment of the example gas turbine engine 20 is less than 1.45. Low Corrected Fan Tip Speed is the actual fan tip speed divided by an industry standard temperature correction of ("T" /518.7)$^{0.5}$. in which "T" represents the ambient temperature in degrees Rankine. The Low Corrected Fan Tip Speed according to one non-limiting embodiment of the example gas turbine engine 20 is less than about 1150 fps (351 m/s).

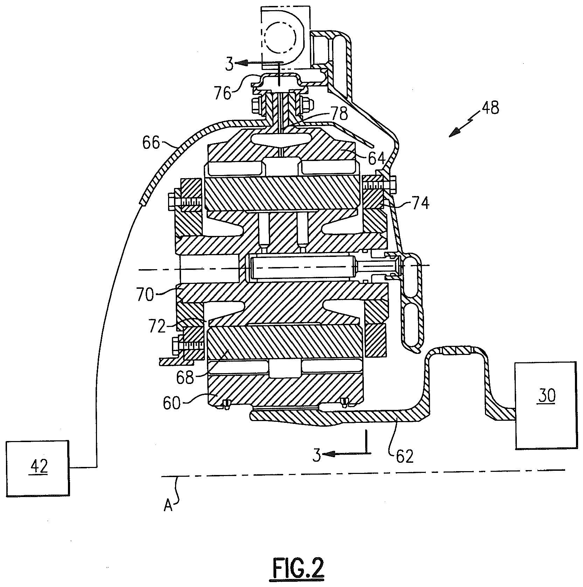

With reference to Figure 2, the geared architecture 48 includes a sun gear 60 driven by a sun gear input shaft 62 from the low speed spool 30, a ring gear 64 connected to a ring gear output shaft 66 to drive the fan 42, and a set of intermediate gears 68 in meshing engagement with the sun gear 60 and ring gear 64. Each intermediate gear 68 is mounted about a journal pin 70 which are each respectively supported by a carrier 74. A replenishable film of lubricant, not shown, is supplied to an annular space 72 between each intermediate gear 68 and the respective journal pin 70.

A lubricant recovery gutter 76 is located around the ring gear 64. The lubricant recovery gutter 76 may be radially arranged with respect to the engine central longitudinal axis A. Lubricant is supplied thru the carrier 74 and into each journal pin 70 to lubricate and cool the gears 60, 64, 68 of the geared architecture 48. Once communicated through the geared architecture the lubricant is radially expelled thru the lubricant recovery gutter 76 in the ring gear 64 by various paths such as lubricant passage 78.

The input shaft 62 and the output shaft 66 counter-rotate as the sun gear 60 and the ring gear 64 are rotatable about the engine central longitudinal axis A. The carrier 74 is grounded and non-rotatable even though the individual intermediate gears 68 are each rotatable about their respective axes 80. Such a system may be referred to as a star system. It should be appreciated that various alternative and additional configurations of gear trains such as planetary systems may also benefit herefrom.

Many gear train components are able to tolerate lubricant starvation for various intervals of time, however the journal pins 70 may be less tolerant of lubricant starvation. Accordingly, whether the gear system is configured as a star, a planetary or other relationship, it is desirable to ensure that lubricant flows to the journal pins 70, at least temporarily under all conditions inclusive of reduced-G conditions which may arise from aircraft maneuvers and/or aircraft orientation. As defined herein, reduced-G conditions include, negative G, zero G, and positive-G conditions materially less than 9.8 meters/sec./sec., particularly when such conditions result in an inability of the main lubricant system to satisfy the lubrication requirements of the gears, journal pins and other components requiring lubrication.

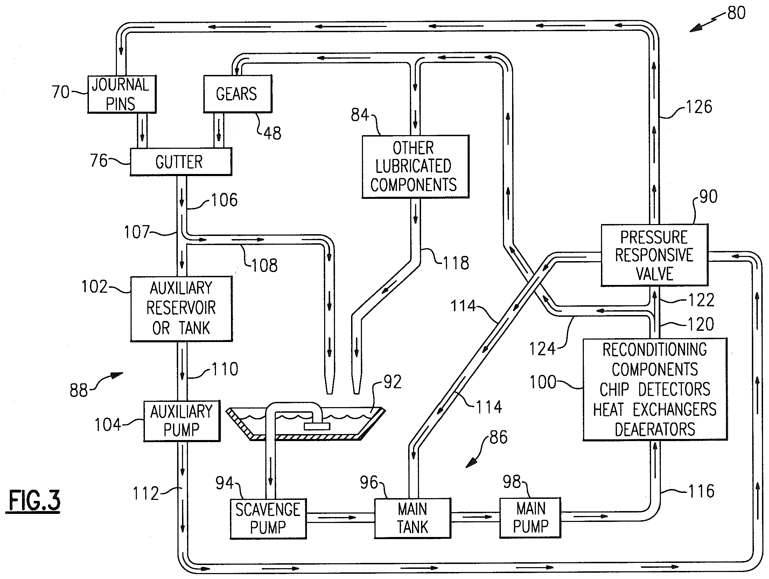

With Reference to Figures 3-5, a lubrication system 80 is schematically illustrated in block diagram form for the geared architecture 48 as well as other components 84 (illustrated schematically) which require lubrication. It should be appreciated that the lubrication system is but a schematic illustration and is simplified in comparison to an actual lubrication system. The lubrication system 80 generally includes a main system 86, an auxiliary system 88 and a pressure responsive valve 90.

The main system 86 generally includes a sump 92, a scavenge pump, a lubricant main tank 96, a main pump 98 and various lubricant reconditioning components such as chip detectors, heat exchangers and deaerators, collectively designated as a reconditioning system 100. The scavenge pump 94 scavenges lubricant from the sump 92, the main tank 96 receives lubricant from the scavenge pump 94 and the main pump 98 pumps lubricant from the main tank 96. The main pump 98 is in fluid communication with the pressure responsive valve 90 through the reconditioning system 100.

The auxiliary system 88 generally includes an lubricant auxiliary tank 102 and an auxiliary pump 104. The auxiliary pump 104 is in fluid communication with the pressure responsive valve 90.

Downstream of the gears of the geared architecture 48, lubricant is communicated to the lubricant recovery gutter 76 as rotation of the gears of the geared architecture 48 ejects lubricant radially outwardly into the lubricant recovery gutter 76. An lubricant auxiliary tank supply passageway 106 extends from the lubricant recovery gutter 76 to the lubricant auxiliary tank 102 such that the lubricant recovery gutter 76 serves as a source of lubricant for the lubricant auxiliary tank 102. A bypass passageway 108 branches from the lubricant auxiliary tank supply passageway 106 at a junction 107 and extends to the sump 92 to divert lubricant flow when the lubricant auxiliary tank 102 is filled. Such flow diversion may be created simply when lubricant backs-up as a result of the filled tank 102.

An lubricant auxiliary tank discharge passageway 110 extends from the lubricant auxiliary tank 102 to the auxiliary pump 104 and an auxiliary pump discharge passageway 112 extends from the auxiliary pump 104 to the pressure responsive valve 90. A main tank return passageway 114 extends from the pressure responsive valve 90 to the main tank 96 and a lubricant delivery passageway 116 extends from the main pump 98 to the lubricant reconditioning system 100. A lubricant return passageway 118 communicates lubricant from the components 84 to the sump 92.

Downstream of the lubricant reconditioning system 100, a conditioned lubricant passageway 120 branches to the pressure responsive valve 90 through a first conditioned lubricant passageway 122 to the gears of the geared architecture 48 as well as the other components 84 through a second conditioned lubricant passageway 124. A journal lubricant passageway 126 communicates lubricant directly to the journal pins 70 downstream of the pressure responsive valve 90.

The lubrication system 80 is operable in both normal and abnormal states of operation. Those skilled in the art will appreciate that normal operation refers to an expected state of operation in which the lubrication system substantially meets design specification. For example, the normal state is a state of operation in which the system delivers lubricant at the rates, temperatures, pressures, etc. determined by the designer so that the lubricated components, including the gears and journal pins, receive a quantity of lubricant enabling them to operate as intended. Abnormal operation refers to a state of operation other than the normal state.

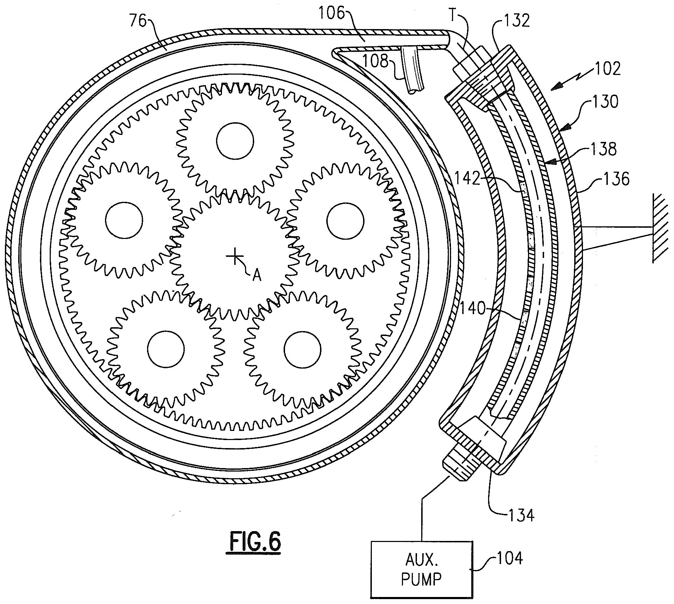

During normal operation, rotation of the gears of the geared architecture 48 ejects lubricant radially outwardly into the lubricant recovery gutter 76 which communicates lubricant into the lubricant auxiliary tank supply passageway 106 which branches substantially tangentially off the lubricant recovery gutter 76 (Figure 6) to capture the ejected lubricant. A portion of the lubricant flows through the bypass passageway 108 and returns to the sump 92 while a relatively smaller portion of the lubricant flows into the lubricant auxiliary tank 102 to establish or replenish a reserve quantity of lubricant therein. That is, the lubricant is cycled by the main system 86, and the lubricant in the auxiliary system 88 is continually refreshed.

The auxiliary pump 104 pumps lubricant from the lubricant auxiliary tank 102 to the pressure responsive valve 90 while the scavenge pump 94 extracts lubricant from the sump 92 for delivery to the main tank 96. The main pump 98 pumps the lubricant from the main tank 96 to the reconditioning system 100. A majority of the conditioned lubricant flows to the geared architecture 48 and other components 84. The remainder of the conditioned lubricant flows to the pressure responsive valve 90 which, in response to normal pressure in the lubrication system 80, directs this remainder of lubricant to the journal pins 70 through the journal pins lubricant passageway 126 and directs reserve lubricant received from the auxiliary pump 104 back to the main tank 96 through the main tank return passageway 114.

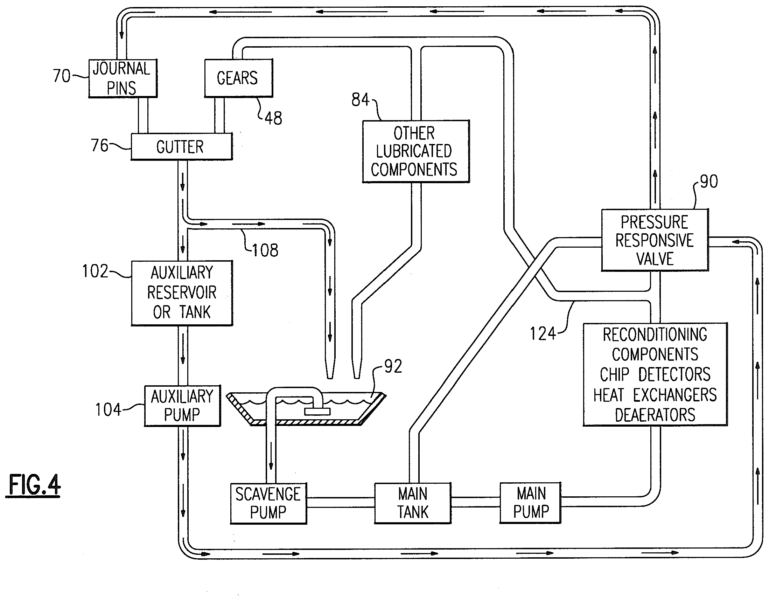

With reference to Figure 4, the lubricant pressure has dropped such that an unsatisfactorily reduced quantity of lubricant flows through the second conditioned passageway 124 after the onset of abnormal operations (e.g. due to a severe leak, clog or malfunction of a system component). In response to the abnormally low pressure, the pressure responsive valve 90 shunts the reserve lubricant received from the auxiliary pump 104 to the journal pins 70 to ensure that the journal pins 70 receive lubricant.

The gears of the geared architecture 48 continue to expel lubricant into the lubricant recovery gutter 76. As with normal operation, a relatively large portion of lubricant flows through the bypass passageway 108 and returns to the sump 92. A relatively smaller portion of the lubricant flows to the lubricant auxiliary tank 102 to at least partially replenish the lubricant that is withdrawn by the auxiliary pump 104.

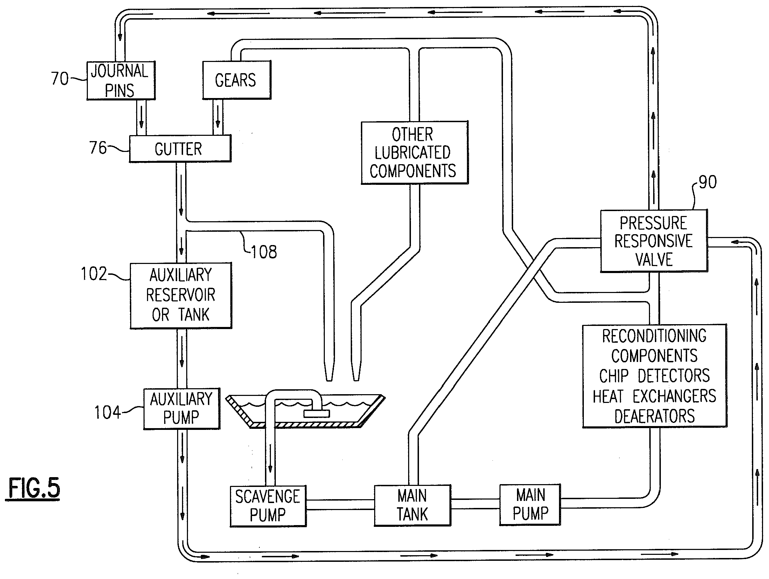

If the abnormally low lubricant pressure persists, the system reaches the state shown in Figure 5 in which the quantity of lubricant that circulates through the lubrication system 80 has been reduced to the point that little or no lubricant backs up from the lubricant auxiliary tank 102 and enters the bypass passageway 108. Instead, nearly all of the limited quantity of lubricant flows to the auxiliary pump 104 and eventually back to the journal pins 70. This state of operation persists until the lubricant auxiliary tank 102 is depleted and the flow rate from the lubricant recovery gutter 76 is insufficient for replenishment.

Although effective during normal-G operation, it may be desirable to extend such operability to reduced-G conditions irrespective of whether the lubricant pressure is normal (Figure 3) or abnormal (Figures 4 and 5).

With reference to Figure 6, the lubricant auxiliary tank 102 is mounted to a non-rotatable mechanical ground. The lubricant auxiliary tank 102 has an lubricant auxiliary tank body 130 that is generally defined by a top 132, a bottom 134 and a wall 136 which extends therebetween. In one disclosed non-limiting embodiment, the wall 136 may define a cylinder with an arcuate profile to fit at least partially around the lubricant recovery gutter 76. That is, the lubricant auxiliary tank body 130 is defined along an axis T which is non-linear. Alternatively, the lubricant auxiliary tank 102 is generally rectilinear in cross-section or other cross-sectional shapes.

The lubricant auxiliary tank 102 contains an lubricant auxiliary tank discharge passageway 138 often referred to as a "piccolo tube" defined along the axis T. The lubricant auxiliary tank discharge passageway 138 may be a component physically distinct from the lubricant auxiliary tank supply passageway 106 and connected thereto by a fitting or other appropriate connection as shown. Alternatively, the discharge passageway may be an extension of the lubricant auxiliary tank supply passageway 106.

In one disclosed non-limiting embodiment, the discharge passageway 138 may define a cylinder with an arcuate profile which generally conforms to the arcuate profile of the lubricant auxiliary tank 102. Alternatively, the lubricant auxiliary tank discharge passageway 138 is generally rectilinear in cross-section or of other cross-sectional shapes either generally equivalent or different than the lubricant auxiliary tank 102. At least a portion of the discharge passageway 138 is contained within the lubricant auxiliary tank 102 and communicates with the auxiliary pump 104.

The portion of the discharge passageway 138 contained within the lubricant auxiliary tank 102 has an opening 140 along an inner radial boundary of the wall 136 to permit lubricant transfer between the lubricant auxiliary tank 102 and the discharge passageway 138. The opening may be of various forms, for example, the opening 140 may be a single opening such as a hole or a slot. In the disclosed, non-limiting embodiment, the opening is a multiple of perforations which decrease in area with a decrease in elevation to at least partially counteract the tendency for the auxiliary pump 104 to extract air from the bottom of the lubricant auxiliary tank 102 during reduced-G operations. It should be appreciated that other baffles or structure may alternatively or additionally be provided.

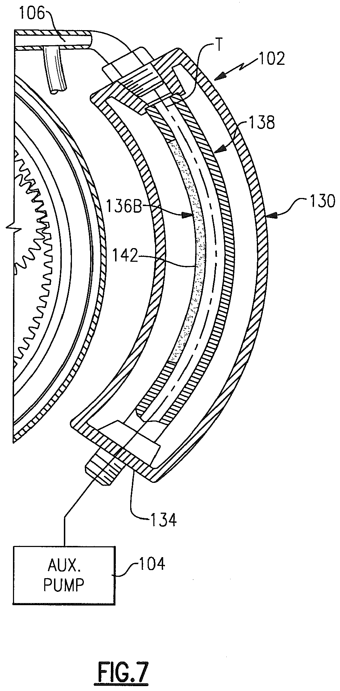

The opening 140 contains a porous media 142 such as porous metal, or other wick material. Alternatively, or in addition the entire, or a portion of the wall 136 may be manufactured of porous media 142 (Figure 7). In this disclosed, non-limiting embodiment, only a portion of the wall 136 is manufactured of porous media 142, typically the portion near the bottom 134 is defined by the porous media 142. It should be appreciated that the contact angle of the lubricant on the surface of the porous media 142 should be less than ninety degrees which is equivalent to being hydrophilic, or having an affinity for the lubricant.

In addition the interior of the discharge passageway 138 may be at least partially filled with the porous media 142. That is, the interior of the discharge passageway 138 may also contain the porous media 142.

For the portion of the porous media 142 that is immersed in lubricant, the micro channels of the porous media 142 readily transfer lubricant between the lubricant auxiliary tank 102 and the discharge passageway 138.

The minimum pressure to suck up lubricant in the porous media is governed by:

$$P = 2 \cdot \gamma \cos \theta / r$$

where:

y is the lubricant-air surface tension;
$\theta$ is the contact angle, and
r is the radius of micro channel of the porous media.

When the porous media 142 is immersed in the lubricant, actual r for capillary effect calculation would be infinity, so P is virtually zero which implies that the lubricant may freely transfer through the porous media 142.

For porous media 142 not immersed in lubricant, the micro channels of the porous media 142 will still be full with lubricant due to the capillary effect to thereby block air from being pulled into the discharge passageway 138. That is, when the porous media 142 is starved of lubricant, r is designed to meet the requirement that the suction pressure is less than the minimum pressure required such the lubricant in the micro channel blocks air entry into the discharge passageway 138. That is, if there is not enough lubricant in contact with the porous media 142, such as a portion of the porous media 142 near the bottom 134 during reduced G operations, the capillary effect of the porous media 142 blocks excessive air from being sucked through that portion of the porous media 142. Suction from the auxiliary pump 104 will pull lubricant into in the discharge passageway 138 through the portion of the porous media 142 immersed in lubricant and other perforations in discharge passageway 138 near the top 132 of the lubricant auxiliary tank 102. As a result, the porous media 142 facilitates lubricant admission into the discharge passageway 138 for the section of the discharge passageway 138 immersed in lubricant and also blocks air from being sucked into the portion of the discharge passageway 138 that may not be completely immersed in lubricant during reduced-G, such as zero-G or negative G operations.

In addition the porous media 142 operates as a filter. In other words the porous media 142 not only facilitates reduced-G operations but also filters the lubricant of extraneous particles larger than the pores of the porous media 142.

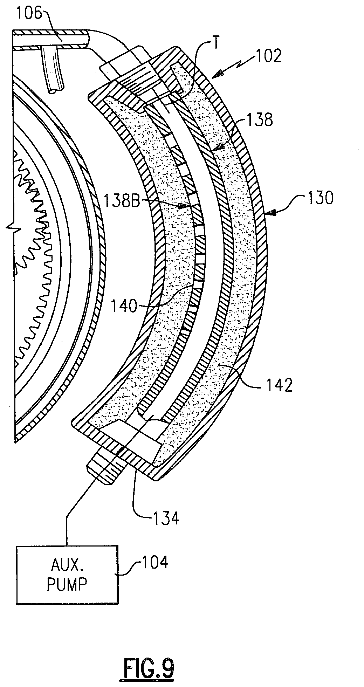

With reference to Figure 9, an illustrative arrangement not in accordance with the present invention includes porous media 142 wrapped around the discharge passageway 138. That is, at least a portion of the lubricant auxiliary tank 102 is filled with porous media 142. The porous media 142 thereby surrounds the perforations along the wall 136 of the discharge passageway 138.

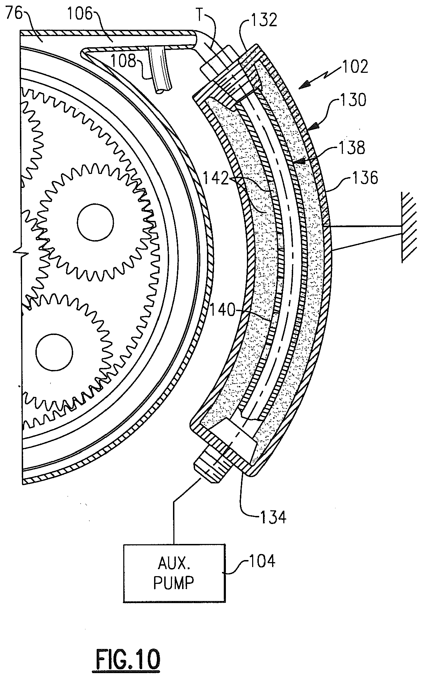

With reference to Figure 10, another disclosed non-limiting embodiment fills at least a portion of the lubricant auxiliary tank 102 with porous media 142' and at least a portion of wall 136 contains or is manufactured of the porous media 142. In this disclosed, non-limiting embodiment, pores of porous media 142' may be larger than that of porous media 142 or otherwise tailored. Alternatively, or in addition, the interior of the discharge passageway 138 contains porous media 142.

Extended Emergency Operability.

It should be understood that relative positional terms such as "forward," "aft," "upper," "lower," "above," "below," "bottom", "top", and the like are with reference to the normal operational attitude of the vehicle and should not be considered otherwise limiting.

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

**Claims**

1. A lubricant tank, comprising:

   a lubricant tank body (102);
   a lubricant tank discharge passageway (138) at least partially within said lubricant tank body (102); and
   a porous media (142) within said lubricant tank body;
   **characterised in that** said lubricant tank discharge passageway (138) includes an opening (140) to allow lubricant transfer between said lubricant tank discharge passageway (138) and said lubricant tank body (102), wherein said opening (140) is through a wall (136) of said lubricant tank discharge passageway (138), and wherein said porous media (142) defines said opening (140).

2. The lubricant tank as recited in claim 1, wherein said lubricant tank body (102) and said lubricant tank discharge passageway (138) are defined along a non-linear axis, said lubricant tank body (102) defines an lubricant auxiliary tank for a Fan Drive Gear System.

3. The lubricant tank as recited in any preceding claim, wherein a contact angle of a lubricant on said porous media (142) is less than 90 degrees.

4. The lubricant tank as recited in any preceding claim, wherein at least a portion of said lubricant tank discharge passageway (138) includes said porous media to allow lubricant transfer between said lubricant tank discharge passageway (138) and said lubricant tank body (102).

5. The lubricant tank as recited in any preceding claim, wherein said porous media (142) at least partially surrounds said lubricant tank discharge passageway (138), and/or wherein at least a portion of said lubricant tank discharge passageway (138) is filled with said porous media (142).

6. The lubricant tank as recited in any preceding claim, wherein said lubricant tank body (102) is filled with said porous media (142), or at least a portion of said lubricant tank body (102) is filled with said porous media (142).

7. The lubricant tank as recited in any preceding claim, wherein said porous media (142) is wrapped around said lubricant tank discharge passageway (130), or said porous media (142) is wrapped around at least a portion of said lubricant tank discharge passageway (138).

8. A lubrication system, comprising:

   a main tank configured to hold lubricant that is communicated from said main tank to a component along a first communication path;
   a lubricant auxiliary tank configured to hold lubricant that is communicated from said component to said lubricant auxiliary tank along a second communication path, said first communication path separate from said second communication path;
   a porous media (142) within said lubricant auxiliary tank body (102); and
   a lubricant auxiliary tank discharge passageway (138) at least partially within said lubricant auxiliary tank,
   **characterised in that** said lubricant auxiliary tank discharge passageway (138) includes an opening (140) to permit lubricant transfer between said lubricant auxiliary tank (102) and said lubricant auxiliary tank discharge passageway (138);
   and that said porous media (142) forms a portion of said lubricant auxiliary tank discharge passageway (138), and said opening (140) is defined by said porous media (142).

9. The lubrication system as recited in claim 8, wherein said porous media (142) defines a multiple of perforations.

10. A method of reducing lubrication starvation from a lubrication system in communication with a geared architecture for a gas turbine engine comprising:

    locating a porous media (142) within a lubricant auxiliary tank;
    **characterised in** forming an opening in a lubricant auxiliary tank discharge passageway (138) through a wall (136) thereof, the lubricant auxiliary tank discharge passageway (138) located within the lubricant auxiliary tank; and
    locating the porous media (142) within the opening (140).

11. The method of claim 10, wherein the opening (136) through the wall is an opening (136) along an inner radius of the lubricant auxiliary tank discharge passageway (138).

12. The method as recited in claim 10 or 11, further comprising locating the porous media (142) around the lubricant auxiliary tank discharge passageway (138).

**Patentansprüche**

1. Schmiermitteltank, umfassend:

   einen Schmiermitteltankkörper (102);
   einen Schmiermitteltankabgabedurchlass (138), der wenigstens teilweise in dem Schmiermitteltankkörper (102) liegt; und
   ein poröses Medium (142) in dem Schmiermitteltankkörper;
   **dadurch gekennzeichnet, dass** der Schmiermitteltankabgabedurchlass (138) eine Öffnung (140) aufweist, um einen Schmiermitteltransfer zwischen dem Schmiermitteltankabgabedurchlass (138) und dem Schmiermitteltankkörper (102) zuzulassen, wobei die Öffnung (140) durch eine Wand (136) des Schmiermitteltankabgabedurchlasses (138) verläuft, und wobei das poröse Medium (142) die Öffnung (140) definiert.

2. Schmiermitteltank nach Anspruch 1, wobei der Schmiermitteltankkörper (102) und der Schmiermitteltankabgabedurchlass (138) entlang einer nicht linearen Achse definiert sind, wobei der Schmiermitteltankkörper (102) einen Schmiermittelhilfstank für ein Gebläseantriebsgetriebesystem definiert.

3. Schmiermitteltank nach einem der vorangehenden Ansprüche, wobei ein Kontaktwinkel eines Schmiermittels an dem porösen Medium (142) weniger als 90 Grad beträgt.

4. Schmiermitteltank nach einem der vorangehenden Ansprüche, wobei wenigstens ein Abschnitt des Schmiermitteltankabgabedurchlasses (138) das poröse Medium aufweist, um einen Schmiermitteltransfer zwischen dem Schmiermitteltankabgabedurchlass (138) und dem Schmiermitteltankkörper (102) zuzulassen.

5. Schmiermitteltank nach einem der vorangehenden Ansprüche, wobei das poröse Medium (142) den Schmiermitteltankabgabedurchlass (138) wenigstens teilweise umgibt und/oder wobei wenigstens ein Abschnitt des Schmiermitteltankabgabedurchlasses (138) mit dem porösen Medium (142) gefüllt ist.

6. Schmiermitteltank nach einem der vorangehenden Ansprüche, wobei der Schmiermitteltankkörper (102) mit dem porösen Medium (142) gefüllt ist oder wenigstens ein Abschnitt des Schmiermitteltankkörpers (102) mit dem porösen Medium (142) gefüllt ist.

7. Schmiermitteltank nach einem der vorangehenden Ansprüche, wobei das poröse Medium (142) um den Schmiermitteltankabgabedurchlass (130) gewickelt ist oder das poröse Medium (142) um wenigstens einen Abschnitt des Schmiermitteltankabgabedurchlasses (138) gewickelt ist.

8. Schmiersystem, umfassend:

   einen Haupttank, der dazu konfiguriert ist, Schmiermittel aufzunehmen, das von dem Haupttank über einen ersten Verbindungsweg an eine Komponente geleitet wird;
   einen Schmiermittelhilfstank, der dazu konfiguriert ist, Schmiermittel aufzunehmen, das von der Komponente über einen zweiten Verbindungsweg an den Schmiermittelhilfstank geleitet wird, wobei der erste Verbindungsweg von dem zweiten Verbindungsweg getrennt ist;
   ein poröses Medium (142) in dem Schmiermittelhilfstankkörper (102); und
   einen Schmiermittelhilfstankabgabedurchlass (138), der wenigstens teilweise in dem Schmiermittelhilfstank liegt,
   **dadurch gekennzeichnet, dass** der Schmiermittelhilfstankabgabedurchlass (138) eine Öffnung (140) aufweist, um Schmiermitteltransfer zwischen dem Schmiermittelhilfstank (102) und dem Schmiermittelhilfstankabgabedurchlass (138) zuzulassen;
   und dass das poröse Medium (142) einen Abschnitt des Schmiermittelhilfstankabgabedurchlasses (138) bildet und die Öffnung (140) durch das poröse Medium (142) definiert ist.

9. Schmiersystem nach Anspruch 8, wobei das poröse Medium (142) eine Vielzahl von Perforationen definiert.

10. Verfahren zum Reduzieren von Schmierungsmangel von einem Schmiersystem in Verbindung mit einer verzahnten Architektur für ein Gasturbinentriebwerk, umfassend:

    Anordnen eines porösen Mediums (142) in einem Schmiermittelhilfstank;
    **gekennzeichnet durch** Bilden einer Öffnung in einem Schmiermittelhilfstankabgabedurchlass (138) durch eine Wand (136) desselben, wobei der Schmiermittelhilfstankabgabedurchlass (138) in dem Schmiermittelhilfstank angeordnet ist; und
    Anordnen des porösen Mediums (142) in der Öffnung (140).

11. Verfahren nach Anspruch 10, wobei die Öffnung (136) durch die Wand eine Öffnung (136) ist, die an einem Innenradius des Schmiermittelhilfstankabgabedurchlasses (138) entlang verläuft.

12. Verfahren nach Anspruch 10 oder 11, ferner umfassend Anordnen des porösen Mediums (142) um den Schmiermittelhilfstankabgabedurchlass (138).

## Revendications

1.  Réservoir de lubrifiant, comprenant :

    un corps de réservoir de lubrifiant (102) ;
    un passage d'évacuation de réservoir de lubrifiant (138) au moins partiellement à l'intérieur dudit corps de réservoir de lubrifiant (102) ; et
    un milieu poreux (142) à l'intérieur dudit corps de réservoir de lubrifiant ;
    **caractérisé en ce que** ledit passage d'évacuation de réservoir de lubrifiant (138) comporte une ouverture (140) pour permettre un transfert de lubrifiant entre ledit passage d'évacuation de réservoir de lubrifiant (138) et ledit corps de réservoir de lubrifiant (102), dans lequel ladite ouverture (140) traverse une paroi (136) dudit passage d'évacuation de réservoir de lubrifiant (138), et dans lequel ledit milieu poreux (142) définit ladite ouverture (140).

2.  Réservoir de lubrifiant selon la revendication 1, dans lequel ledit corps de réservoir de lubrifiant (102) et ledit passage d'évacuation de réservoir de lubrifiant (138) sont définis le long d'un axe non linéaire, ledit corps de réservoir de lubrifiant (102) définit un réservoir auxiliaire de lubrifiant pour un système d'engrenages d'entraînement de soufflante.

3.  Réservoir de lubrifiant selon l'une quelconque des revendications précédentes, dans lequel un angle de contact d'un lubrifiant sur ledit milieu poreux (142) est inférieur à 90 degrés.

4.  Réservoir de lubrifiant selon l'une quelconque des revendications précédentes, dans lequel au moins une partie dudit passage d'évacuation de réservoir de lubrifiant (138) comporte ledit milieu poreux pour permettre un transfert de lubrifiant entre ledit passage d'évacuation de réservoir de lubrifiant (138) et ledit corps de réservoir de lubrifiant (102).

5.  Réservoir de lubrifiant selon l'une quelconque des revendications précédentes, dans lequel ledit milieu poreux (142) entoure au moins partiellement ledit passage d'évacuation de réservoir de lubrifiant (138), et/ou dans lequel au moins une partie dudit passage d'évacuation de réservoir de lubrifiant (138) est remplie dudit milieu poreux (142).

6.  Réservoir de lubrifiant selon l'une quelconque des revendications précédentes, dans lequel ledit corps de réservoir de lubrifiant (102) est rempli dudit milieu poreux (142), ou au moins une partie dudit corps de réservoir de lubrifiant (102) est remplie dudit milieu poreux (142).

7.  Réservoir de lubrifiant selon l'une quelconque des revendications précédentes, dans lequel ledit milieu poreux (142) est enroulé autour dudit passage d'évacuation de réservoir de lubrifiant (130), ou ledit milieu poreux (142) est enroulé autour d'au moins une partie dudit passage d'évacuation de réservoir de lubrifiant (138).

8.  Système de lubrification, comprenant :

    un réservoir principal configuré pour retenir un lubrifiant qui est transféré dudit réservoir principal à un élément le long d'un premier trajet de communication ;
    un réservoir auxiliaire de lubrifiant configuré pour retenir un lubrifiant qui est transféré dudit élément audit réservoir auxiliaire de lubrifiant le long d'un second trajet de communication, ledit premier trajet de communication étant distinct dudit second trajet de communication ;
    un milieu poreux (142) à l'intérieur dudit corps de réservoir auxiliaire de lubrifiant (102) ; et
    un passage d'évacuation de réservoir auxiliaire de lubrifiant (138) au moins partiellement à l'intérieur dudit réservoir auxiliaire de lubrifiant,
    **caractérisé en ce que** ledit passage d'évacuation de réservoir auxiliaire de lubrifiant (138) comporte une ouverture (140) pour permettre un transfert de lubrifiant entre ledit réservoir auxiliaire de lubrifiant (102) et ledit passage d'évacuation de réservoir auxiliaire de lubrifiant (138) ;
    **en ce que** ledit milieu poreux (142) forme une partie dudit passage d'évacuation de réservoir auxiliaire de lubrifiant (138), et ladite ouverture (140) est définie par ledit milieu poreux (142).

9.  Système de lubrification selon la revendication 8, dans lequel ledit milieu poreux (142) définit une multitude de perforations.

10. Procédé de réduction d'insuffisance de lubrification à partir d'un système de lubrification en communication avec une architecture à engrenages pour un moteur à turbines à gaz comprenant :

    le positionnement d'un milieu poreux (142) à l'intérieur d'un réservoir auxiliaire de lubrifiant ;
    **caractérisé par** la formation d'une ouverture dans un passage d'évacuation de réservoir auxiliaire de lubrifiant (138) traversant une paroi (136) de celui-ci, le passage d'évacuation de réservoir auxiliaire de lubrifiant (138) étant situé à l'intérieur du réservoir auxiliaire de lubrifiant ; et
    le positionnement du milieu poreux (142) à l'intérieur de l'ouverture (140).

**11.** Procédé selon la revendication 10, dans lequel l'ouverture (136) traversant la paroi est une ouverture (136) le long d'un rayon interne du passage d'évacuation de réservoir auxiliaire de lubrifiant (138).

**12.** Procédé selon la revendication 10 ou 11, comprenant en outre le positionnement du milieu poreux (142) autour du passage d'évacuation de réservoir auxiliaire de lubrifiant (138).

FIG.1

**FIG.2**

EP 2 898 202 B1

80

70 JOURNAL PINS

GEARS

48

84 OTHER LUBRICATED COMPONENTS

126

76 GUTTER

90 PRESSURE RESPONSIVE VALVE

106

107

108

118

114

122

120

102 AUXILIARY RESERVOIR OR TANK

124

100 RECONDITIONING COMPONENTS CHIP DETECTORS HEAT EXCHANGERS DEAERATORS

88

110

92

114

86

104 AUXILIARY PUMP

94 SCAVENGE PUMP

96 MAIN TANK

98 MAIN PUMP

116

112

FIG.3

FIG.4

FIG.5

FIG.6

FIG.7

**FIG.8**

**FIG.9**

**FIG.10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1994974 A